# EUROPEAN PATENT SPECIFICATION

(11) **EP 1 511 611 B1**
(45) Date of publication and mention of the grant of the patent: **14.05.2008**
(21) Application number: 03712021.9
(22) Date of filing: 12.03.2003
(51) Int. Cl.: B29C 41/18, B29C 41/00, B29K 67/00

(54) **PROCESS FOR THE PREPARATION OF FILM COATINGS FOR THE FINISHING OF MOULDED ARTICLES**
VERFAHREN ZUR VORBEREITUNG VON BESCHICHTUNGSFILMEN ZUR VEREDELUNG VON FORMSTÜCKEN
PROCEDE DE FABRICATION DE REVETEMENTS PELLICULAIRES POUR LE FINISSAGE D'ARTICLES MOULES

(30) Priority: 13.05.2002 IT MI20021010
(43) Date of publication of application: 09.03.2005
(73) Proprietor: P Group S.r.l., 20129 Milan (IT)
(72) Inventor: BORTOLON, Vittorio, I-35123 Padova (IT); SAVADORI, Tonino, I-44038 Pontelagoscuro-Ferrara (IT)
(74) Representative: De Gregori, Antonella
(86) International application number: PCT/EP2003/002697
(87) International publication number: WO 2003/095174

(56) References cited:
- EP-A- 0 723 844
- GB-A- 1 416 388
- US-A- 5 210 127
- PATENT ABSTRACTS OF JAPAN vol. 018, no. 598 (M-1704), 15 November 1994 (1994-11-15) & JP 06 226763 A (DU PONT MITSUI POLYCHEM CO LTD;OTHERS: 01), 16 August 1994 (1994-08-16)

## Description

The present invention relates to a process for the preparation of film coatings for the finishing of moulded articles.

More specifically, the present invention relates to a process for the preparation of film coatings, for the finishing of moulded articles, for example made of thermoplastic and/or thermosetting material, based on elastomeric polyester resins.

As it is now known from industrial practice, when articles with high-quality surface characteristics are to be produced, a basic structure is first moulded with the conventional forming techniques, such as injection moulding, and with traditional materials such as polypropylene, then the article undergoes surface finishing and refining by coating with synthetic skins or film coatings prepared separately and using, on the contrary, particular techniques and materials.

For example, in the luxury car industry, the dashboards, or analogous parts made of synthetic material, are prepared by injection moulding a basic structure starting from not particularly sophisticated materials which above all must have suitable physico-mechanical properties for guaranteeing, among other characteristics, the dimensional stability with time of the moulded article. For these purposes both alloys and filled polymers are appropriate.

The basic structure is subsequently coated with a synthetic foam, to improve the feel, and is finally refined with a coating or skin, which is glued onto the foam layer, for refining the surface.

The skin is prepared with the slush moulding technique which essentially consists in three phases. In the first phase, a metallic mould, preferably nickel, having the negative shape of the article to be surface finished, is heated to a high temperature. In the second phase, a thin layer of powder of the refining thermoplastic material is distributed on the mould, applying a multi-rotating movement to the mould, immediately after the distribution of the powder and closing with a counter-mould. In the third phase, the mould is cooled and the skin is extracted.

As it is evident, the critical phase of the slush moulding is the second phase. As it is distributed onto the mould at a high temperature, the powder melts and, as a result of the multi-rotating movement, it flows homogeneously and is distributed onto the whole surface of the mould, totally covering it. It is also evident that the fluidity of the refining powder material is a key characteristic for reaching all the critical points of the mould, including the undercuts, without producing holes or localized thickening which would reduce the value of the skin.

At present, the main thermoplastic material with appropriate characteristics for allowing it to be used in slush moulding, is polyvinylchloride (PVC) as, in addition to having an excellent fluidity in the molten state which makes it compatible with this moulding technique, it also has surface softness suitable, for example, for dashboards or other internal parts of luxury cars.

Unfortunately, for environmental and recycling reasons, PVC cannot be used as refining material due to the regulations issued by the major European countries which forbid its use. Document EP-A-723 844 discloses a slush moulding process using a pulverized mixture of a polypropylene resin and a styrene series thermoplastic elastomer with fluidity enhancing fillers.

The Applicant has now found an alternative material, consisting of an elastomeric polyester, which, in the form of micro-pellets, can be an excellent substitute of PVC in the preparation of thin films or skins for the coating of articles which must undergo surface refining.

It is, therefore, an object of the present invention a process for the preparation of film coatings for the finishing of moulded articles which comprises:
a. heating to a temperature higher than 200°C a metallic mould which negatively reproduces the shape of the article to be coated;
b. distributing onto the metallic mould a micro-pellet of a (co)polyester thermoplastic resin having a spheroidal physical form and a granulometry, measured with an electronic microscope, of less than 500 micrometres;
c. subjecting the mould, immediately after the distribution of the micro-pellet, to a multi-rotating movement according to the slush-moulding technique;
d. cooling and extracting the polyester resin coating from the mould.

According to the present invention, the metallic mould is heated to a temperature higher than 200°C, generally from 220 to 270°C, to obtain the immediate melting of the polyester resin powder. In order to have a favourable thermal exchange for the slush moulding technique, the mould consists of a plate made of a metallic material with a high thermal conductivity, such as, for example, nickel, copper or silver. Among these, nickel is preferred.

As a result of the high thermal conductivity of the metal, the thermoplastic micro-pellet melts almost instantaneously, also causing the cooling of the mould and consequently the hardening of the skin. For this reason, the time between the distribution of the micro-pellet on the mould, the relative closing with the counter-mould, and the start of the multi-rotating movement must be as reduced as possible in order to leave the thermoplastic material in the molten state for a sufficient time for it to be homogeneously distributed on the metallic surface of the plate. Details on the slush moulding technology can be found in European patent 476,742 or in published international patent applications WO 94/12331 and 96/33060.

At the end of the slush moulding, the mould is further cooled and the skin, which has a homogeneous thickness ranging from 0.5 to 2.5 mm, is extracted.

According to the present invention, the micro-pellet used in the preparation of the film coating has a particle-size preferably ranging from 150 to 300 micrometres and is obtained by the extrusion and cutting, through a cooled die, of the (co)polyester in granular form optionally already mixed with conventional additives such as dyes, pigments, stabilizers, plasticizers, etc., or of the (co)polyester in powder form coming directly from the synthesis, to which the optional additives are added during the micro-pelletization phase.

Any (co)polyester resin can be used in the preferred preparation of the film coatings object of the present invention, provided it has a melting point lower than 260-270°C and an average molecular weight Mw ranging from 20,000 to 100,000. In particular, preferred (co)polyester resins are those obtained by polycondensation between units deriving from at least one dicarboxylic acid and a mixture comprising at least one diol with a low molecular weight, for example lower than 250, and/or at least one poly(alkyleneoxide)glycol, in which the alkyleneoxide group contains from 1 to 10 carbon atoms, with an average molecular weight ranging from 250 to 6000 and a carbon/oxygen ratio ranging from 1.8 to 4.3. The resin which is obtained therefore consists essentially of several recurrent long-chain and short-chain interlinear ester units connected with each other by ester bonds.

Particularly preferred are elastomeric (co)polyester resins obtained from the polycondensation of units deriving from at least one aromatic dicarboxylic acid selected from phthalic, isophthalic and terephthalic acids, or from di-benzoic acid, 1,5-naphthalenedicarboxylic acid, 2,6-naphthalenedicarboyxlic acid, 2,7-naphthalenedicarboyxlic acid, phenanthralenedicarboxylic acid, etc. and their C₁-C₄ alkyl derivatives with C₂-C₁₀ alkyl diols selected from ethylene-, propylene-, tetramethylene-, isobutylene-, pentamethylene-glycols in mixture with the poly(alkyleneoxide)-glycol selected from poly(1,2 and 1,3-propylene-oxide)glycol, poly(tetramethyleneoxide)glycol, poly(penta-methyleneoxide) glycol, etc.

Particularly preferred according to the present invention are elastomeric copolyester resins obtained from the condensation of terephthalic acid with a mixture of tetramethylene glycol and poly(tetramethyleneoxide)glycol, with an average molecular weight Mw ranging from 500 to 6000, preferably from 1000 to 4000, wherein the unit deriving from poly(tetramethylene)glycol is present in quantities greater than or equal to 60% by weight.

In addition to the segmented (co)polyesters, according to the present invention, all blends comprising the same (co)polyesters with other compatible or compatizable thermoplastic (co)polymers having an elastomeric behaviour or with a shore hardness D < 40 can be included, said other (co)polymers being present in a quantity of less than 30% by weight.

Generally, either the (co)polyesters described above or the relative blends with other thermoplastic resins are generally materials having the following characteristics:

| | |
|---|---|
| Shore Hardness D | < 40; |
| MVR 220°C/2.16 kg | > 10cc/10'; |
| Melting point | = 150-210°C. |

Products with the physico-chemical characteristics described above are commercially available under the tradename of PIBIFLEX of the Applicant.

Some illustrative but non-limiting examples are provided for a better understanding of the present invention and for its embodiment.

### EXAMPLE 1

A film coating is produced with the slush moulding technique, having a thickness of 0.8 mm to be glued onto a car dashboard structure having a thickness of 2 mm made of polymer alloy or filled polymer, where an expanded resin (PU) having a thickness of 6-10 mm, is sandwich inserted between the skin and the structure.

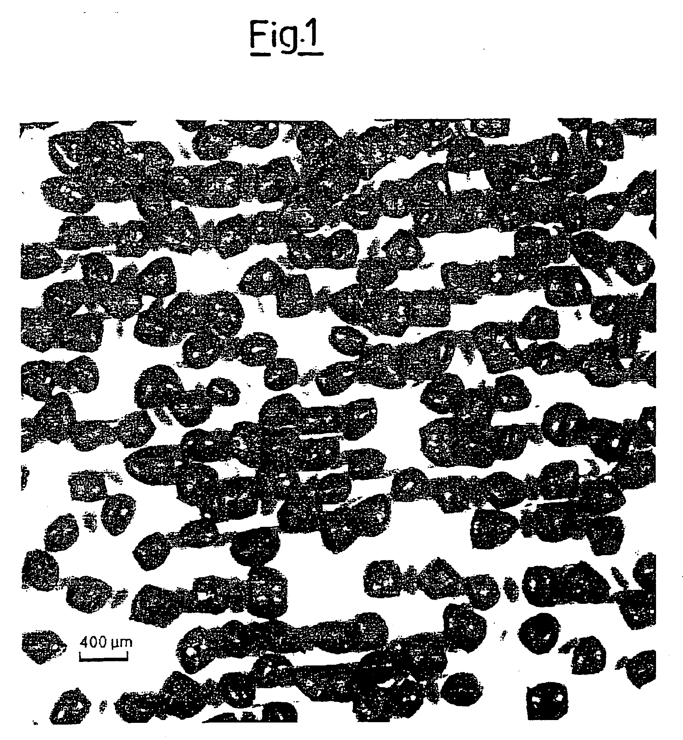

A micro-pellet, having an average spheroidal particle-size of 250-400 micrometres (Figure 1), of an elastomeric copolyester resin having the following characteristics, is distributed on a nickel slush-moulding mould brought to a temperature of about 250°C:

| | |
|---|---|
| Melting point | = 175°C; |
| MVR 220°C/2.16 kg | = 40 cc/10'; |
| Shore Hardness D | = 25. |

At the end of the moulding, a coating is obtained, with a homogeneous thickness of 0.8 mm, which does not have any surface defects visible to the naked eye, and which adheres perfectly through the expanded resin to the dashboard structure.

### EXAMPLE 2 (Comparative)

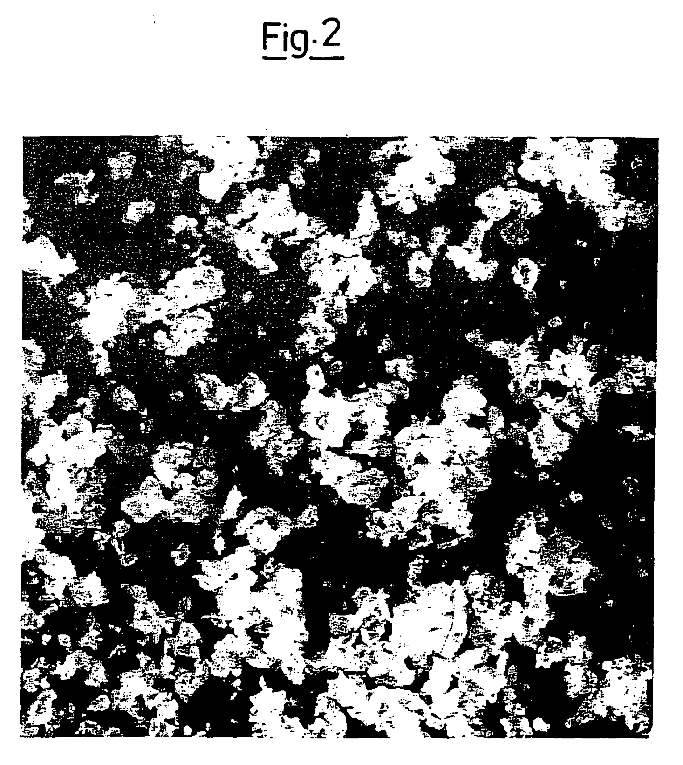

The test of Example 1 is repeated except for the use of a powder of the same copolyester resin cryogenically ground to a particle-size of about 250 micrometres (Figure 2).

At the end of the moulding, a coating is obtained, which, although it adheres to the dashboard structure, has evident surface defects, for example holes and streaks, and a heterogeneous thickness.

## Claims

1. A process for the preparation of film coatings for the finishing of moulded articles which comprises:
a. heating to a temperature higher than 200°C a metallic mould which negatively reproduces the shape of the article to be coated;
b. distributing onto the metallic mould a micro-pellet of a (co)polyester thermoplastic resin having a spheroidal physical form and granulometry, measured with an electronic microscope, of less than 500 micrometres;
c. subjecting the mould, immediately after the distribution of the micro-pellet, to a multi-rotating movement according to the slush-moulding technique;
d. cooling and extracting the polyester resin coating from the mould.

2. The process according to claim 1, wherein the metallic mould is heated to a temperature ranging from 220 to 270°C.

3. The process according to claim 1, wherein the mould is made of nickel.

4. The process according to any of the previous claims, wherein the coating has a homogeneous thickness ranging from 0.5 to 2.5 mm.

5. The process according to any of the previous claims, wherein the micro-pellet has a particle-size ranging from 150 to 300 micrometres.

6. The process according to claim 5, wherein the micro-pellet is obtained by extrusion and cutting through a cooled die.

7. The process according to any of the previous claims, wherein the (co)polyester resins have a melting point lower than 260-270°C and an average molecular weight Mw ranging from 20,000 to 100,000.

8. The process according to claim 7, wherein the (co)polyester resins are obtained by polycondensation between units deriving from at least one dicarboxylic acid and a mixture comprising at least one diol with a low molecular weight and/or at least one poly(alkyleneoxide)glycol, in which the alkyleneoxide group contains from 1 to 10 carbon atoms, with an average molecular weight ranging from 250 to 6000 and a carbon/oxygen ratio ranging from 1.8 to 4.3.

9. The process according to claim 8, wherein the (co)polyester resins are elastomeric obtained from the polycondensation of units deriving from at least one aromatic dicarboxylic acid with C₂-C₁₀ alkyl diols mixed with a poly(alkyeneoxide)glycol, in which the alkyleneoxide group contains from 1 to 10 carbon atoms.

10. The process according to claim 9, wherein the elastomeric copolyester resins are obtained from the condensation of terephthalic acid with a mixture of tetramethylene glycol and poly(tetramethyleneoxide)-glycol, with an average molecular weight Mw ranging from 500 to 6000, preferably from 1000 to 4000, wherein the unit deriving from poly(tetramethylene)glycol is present in quantities greater than or equal to 60% by weight.

11. The process according to any of the previous claims, wherein the (co)polyester resins have the following characteristics:
| | |
|---|---|
| Shore Hardness D | < 40; |
| MVR 220°C/2.16 kg | > 10cc/10' |
| Melting point | = 150-210°C. |

12. The process according to any of the previous claims, wherein the elastomeric copolyester resins are mixed with other compatible or compatizable thermoplastic (co)polymers having an elastomeric behaviour or with a shore hardness D < 40, said other (co)polymers being present in a quantity lower than 30% by weight.

## Patentansprüche

1. Verfahren zum Herstellen von Beschichtungsfilmen zur Veredelung von Formgegenständen, welches umfasst:
a. Erhitzen einer metallischen Form, welche die Form des zu beschichtenden Gegenstandes negativ reproduziert, auf eine Temperatur über 200°C;
b. Verteilen von Mikropellets eines thermoplastischen (Co)polyesterharzes mit einer kugelförmigen physikalischen Form und Granulometrie, gemessen mit einem Elektronenmikroskop, von weniger als 500 µm, auf der Metallform;
c. Unterwerfen der Form unmittelbar nach dem Verteilen der Mikropellets einer Multirotationsbewegung gemäß dem Schalengießverfahren;
d. Kühlen und Extrahieren der Polyesterharzbeschichtung aus der Form.

2. Verfahren nach Anspruch 1, wobei die metallische Form auf eine Temperatur im Bereich von 220 bis 270°C erhitzt wird.

3. Verfahren nach Anspruch 1, wobei die Form eine Nickelform ist.

4. Verfahren nach einem der vorstehenden Ansprüche, wobei die Beschichtung eine homogene Dicke im Bereich von 0,5 bis 2,5 mm hat.

5. Verfahren nach einem der vorstehenden Ansprüche, wobei die Mikropellets Teilchengrößen im Bereich von 150 bis 300 µm haben.

6. Verfahren nach Anspruch 5, wobei die Mikropellets durch Extrudieren und Schneiden durch eine gekühlte Düse erhalten werden.

7. Verfahren nach einem der vorstehenden Ansprüche, wobei die (Co)polyesterharze einen Schmelzpunkt unter 260 bis 270°C und ein mittleres Molekulargewicht Mw im Bereich von 20 000 bis 100 000 haben.

8. Verfahren nach Anspruch 7, wobei die (Co)polyesterharze durch Polykondensation zwischen Einheiten, die von mindestens einer Dicarbonsäure abgeleitet sind, und einem Gemisch erhalten werden, das mindestens ein Diol eines niedrigen Molekulargewichts und/oder mindestens ein Poly(alkylenoxid)glycol, wobei die Alkylenoxidgruppe 1 bis 10 Kohlenstoffatome aufweist, mit einem mittleren Molekulargewicht im Bereich von 250 bis 6000 und einem Kohlenstoff/Sauerstoff-Verhältnis im Bereich von 1,8 bis 4,3 enthält.

9. Verfahren nach Anspruch 8, wobei die (Co)polyesterharze elastomer sind und durch die Polykondensation von Einheiten, die von mindestens einer aromatischen Dicarbonsäure abgeleitet sind, mit C₂-C₁₀-Alkyldiolen im Gemisch mit einem Poly(alkylenoxid)glycol erhalten werden, wobei die Alkylenoxidgruppe 1 bis 10 Kohlenstoffatome enthält.

10. Verfahren nach Anspruch 9, wobei die elastomeren Copolyesterharze durch Kondensation von Terephthalsäure mit einem Gemisch von Tetramethylenglycol und Poly(tetramethylenoxid)glycol mit einem mittleren Molekulargewicht Mw im Bereich von 500 bis 6000, vorzugsweise 1000 bis 4000, erhalten werden, wobei die von Poly(tetramethylen)glycol abgeleitete Einheit in Mengen von mindestens 60 Gew.-% vorhanden ist.

11. Verfahren nach einem der vorstehenden Ansprüche, wobei die (Co)polyesterharze die folgenden Eigenschaften haben:
| | |
|---|---|
| Shore-Härte G | < 40; |
| MVR 220°C/2,16 kg | > 10cc/10' |
| Schmelzpunkt | = 150-210°C |

12. Verfahren nach einem der vorstehenden Ansprüche, wobei die elastomeren Copolyesterharze mit anderen thermoplastischen (Co)polymeren, die verträglich sind oder verträglich gemacht werden können, mit einem elastomeren Verhalten oder mit einer Shore-Härte D < 40 gemischt werden, wobei die anderen (Co)polymere in einer Menge von unter 30 Gew.-% vorhanden sind.

## Revendications

1. Procédé de préparation de pelliculages pour la finition d'articles moulés qui comprend les étapes consistant à :
a. chauffer, à une température supérieure à 200°C, un moule métallique qui reproduit en négatif la forme de l'article à pelliculer ;
b. distribuer, sur le moule métallique, un micro-granulé d'une résine thermoplastique (co)polyester ayant une forme physique sphéroïdale et une granulométrie, mesurée avec un microscope électronique, inférieure à 500 micromètres ;
c. soumettre le moule, juste après l'application du micro-granulé, à un mouvement multi-rotatif selon la technique de moulage par embouage ;
d. refroidir et extraire la pellicule de résine polyester du moule.

2. Procédé selon la revendication 1, dans lequel le moule métallique est chauffé dans une gamme de températures allant de 220°C à 270°C.

3. Procédé selon la revendication 1, dans lequel le moule est fait de nickel.

4. Procédé selon l'une quelconque des revendications précédentes, dans lequel la pellicule présente une épaisseur uniforme dans la gamme allant de 0,5 à 2,5 mm.

5. Procédé selon l'une quelconque des revendications précédentes, dans lequel le micro-granulé présente une granulométrie allant de 150 à 300 micromètres.

6. Procédé selon la revendication 5, dans lequel le micro-granulé est obtenu par extrusion et découpé au moyen d'une matrice refroidie.

7. Procédé selon l'une quelconque des revendications précédentes, dans lequel les résines (co)polyester possèdent un point de fusion inférieur à 260°C-270°C et une masse moléculaire moyenne Mm dans la gamme allant de 20 000 à 100 000.

8. Procédé selon la revendication 7, dans lequel les résines (co)polyester sont obtenues par polycondensation entre des motifs provenant d'au moins un acide dicarboxylique et un mélange comprenant au moins un diol avec une faible masse moléculaire et/ou au moins un poly(oxyde d'alkylène)glycol, dans lequel le groupe oxyde d'alkylène contient de 1 à 10 atomes de carbone, avec une masse moléculaire moyenne dans la gamme allant de 250 à 6 000 et un rapport carbone/oxygène dans la gamme allant de 1,8 à 4,3.

9. Procédé selon la revendication 8, dans lequel les résines (co)polyester sont élastomères et sont obtenues par polycondensation de motifs provenant d'au moins un acide dicarboxylique aromatique avec les (alkyle en C₂ à C₁₀)-diols mélangés avec un poly(oxyde d'alkylène)glycol, dans lequel le groupe oxyde d'alkylène contient de 1 à 10 atomes de carbone.

10. Procédé selon la revendication 9, dans lequel les résines élastomères copolyester sont obtenues par condensation de l'acide téréphtalique avec un mélange de tétraméthylèneglycol et de poly(oxyde de tétraméthylène)-glycol, avec une masse moléculaire moyenne Mm dans la gamme allant de 500 à 6 000, de préférence de 1 000 à 4 000, dans lequel le motif provenant du poly(tétraméthylène)glycol est présent en une quantité supérieure ou égale à 60% en poids.

11. Procédé selon l'une quelconque des revendications précédentes, dans lequel les résines (co)polyester présentent les caractéristiques suivantes :
| | |
|---|---|
| Dureté Shore D | < 40 ; |
| MVR 220°C/2,16 kg | > 10 cm³/10' |
| Point de fusion | = 150°C à 210°C. |

12. Procédé selon l'une quelconque des revendications précédentes, dans lequel les résines élastomères copolyester sont mélangées avec d'autres (co)polymères thermoplastiques compatibles ou pouvant être compatibles et qui présentent un caractère élastomère ou une dureté Shore D < 40, lesdits autres (co)polymères étant présents en une quantité inférieure à 30% en poids.
